# EUROPÄISCHE PATENTANMELDUNG

(11) **EP 1 801 953 A1**
(43) Veröffentlichungstag der Anmeldung: **27.06.2007**
(21) Anmeldenummer: 05027972.8
(22) Anmeldetag: 20.12.2005
(51) Int. Cl.: H02K 5/128, H02K 7/18, H02K 7/09, F01D 15/10, F01D 25/12, F01D 25/18

(54) **Hermetisch dichter Kreislauf einer Strömungsmaschine**

(71) Anmelder: SIEMENS AKTIENGESELLSCHAFT, 80333 München (DE)
(72) Erfinder: Heckel, Christoph, 91207 Lauf (DE)

(57) **Zusammenfassung**

Die vorliegende Erfindung betrifft eine Strömungsmaschine (6), insbesondere Dampfturbine, vorzugsweise zur Verstromung von Abwärme geringer thermischer Leistung sowie eine Dampfkraftanlage mit einer derartigen Strömungsmaschine (6).

## Beschreibung

Die vorliegende Erfindung betrifft eine Strömungsmaschine, insbesondere Dampfturbine, vorzugsweise zur Verstromung von Abwärme geringer thermischer Leistung sowie eine Dampfkraftanlage mit einer derartigen Strömungsmaschine.

Strömungsmaschinen zur Verstromung von Wärme sind aus dem Stand der Technik an sich bekannt, weshalb auf deren eingehende Beschreibung verzichtet wird. Sie weisen insbesondere im Bereich von Abdichtungen von sich zueinander bewegenden Bauelementen, beispielsweise von Wellendurchführungen, Undichtigkeiten auf, die den Wirkungsgrad verschlechtern. Aufgrund dieser Undichtigkeiten kommt es zu Leckageverlusten des Prozessmediums, die bei bekannten Strömungsmaschinen nicht zu vermeiden sind. Auch eine Verbesserung der Dichtwirkung von Wellendichtungen führt nicht zum gewünschten Erfolg. Die Wellendichtungen unterliegen einem nicht unerheblichen Verschleiß, wodurch wiederum Leckageverluste entstehen.

Um die vorgenannten Leckageverluste bei bekannten Strömungsmaschinen zu kompensieren, wird dem Prozesskreislauf kontinuierlich Prozessmedium zugeführt. Die Kompensation der Verluste ist mit einem nicht unbeachtlichen Aufwand verbunden, da das in der Anlage und der Strömungsmaschine verwendete Prozessmedium gereinigt, aufbereitet und überwacht werden muss. Eine Verstromung der Abwärme von Wärmequellen mit geringer thermischer Leistung, beispielsweise Prozesswärme, Abluft von Brennstoffzellen, Abgasen von Biogasmotoren, etc., ist daher mit bekannten Strömungsmaschinen und -anlagen unwirtschaftlich, weshalb diese Abwärme zur Zeit lediglich für Heizzwecke oder Prozessanwendungen verwendet oder gänzlich ungenutzt an die Umgebung abgegeben wird.

Es ist Aufgabe der vorliegenden Erfindung, eine Strömungsmaschine sowie eine Anlage zur Verstromung der Abwärme von Wärmequellen geringer thermischer Leistung, insbesondere geringer als 3.000 kW, zu ermöglichen, wobei insbesondere Leckageverluste des Prozessmediums weitgehend vermieden oder verhindert werden und eine kontinuierliche Aufbereitung und Überwachung des Prozessmediums entfallen kann.

Diese Aufgabe wird durch eine eingangs genannte Strömungsmaschine mit einem einen Einlass und einen Auslass für ein die Strömungsmaschine antreibendes Prozessmedium aufweisenden Gehäuse und einer einen Rotor mit Laufschaufeln tragenden Welle gelöst, die in dem Gehäuse gelagert ist, wobei Einlass und Auslass hermetisch dicht mit Zu- und Ableitungen zur Strömungsmaschine verbindbar sind und dass innerhalb des Gehäuses vom Prozessmedium beaufschlagte Raumvolumen hermetisch abgedichtet ist. Die Erfindung wird des Weiteren durch eine Dampfkraftanlage mit den Merkmalen der Ansprüche 13 und 14 gelöst.

Das innerhalb des Gehäuses vom Prozessmedium beaufschlagte Raumvolumen der erfindungsgemäßen Strömungsmaschine ist in vorteilhafter Weise hermetisch abgedichtet. "Hermetisch dicht" im Sinne der Erfindung bedeutet, dass bezüglich der Strömungsmaschine mit Ausnahme des Ein- und Auslasses für das die Strömungsmaschine antreibende Medium keinerlei Öffnungen oder Leckagestellen vorhanden sind, wie sie bei Strömungsmaschinen aus dem Stand der Technik bekannt sind. "Hermetisch dicht" bezüglich einer erfindungsgemäßen Dampfkraftanlage bedeutet, dass der gesamte Kreislauf des die Strömungsmaschine der Dampfkraftanlage antreibenden Mediums mediumsdicht ausgebildet ist. "Hermetisch dicht" im Sinne der Erfindung bedeutet insbesondere, dass weder ein Austreten des die Strömungsmaschine antreibenden Mediums, noch ein Eindringen von gasförmigen oder flüssigen Fremdmedien aus der Umgebung, wie beispielsweise Luft, möglich ist.

Das innerhalb des Gehäuses der Strömungsmaschine vom Medium beaufschlagte Raumvolumen ist insbesondere daher hermetisch dicht ausgebildet, da das Gehäuse keine Wellendurchführungen aufweist, sondern die Welle vollständig in seinem Inneren aufnimmt und schließt. In vorteilhafter Weise entfallen somit aufwendige, mit unvermeidbaren Leckageverlusten und mit einem nicht unbedeutenden Verschleiß verbundene Abdichtungen der rotierenden Welle gegenüber dem Gehäuse im Bereich von Wellendurchführungen. Das innerhalb des Gehäuses vom Medium beaufschlagte Raumvolumen ist dabei entweder durch das Gehäuse selbst oder durch mit diesem fest verbundene und abgedichtete Konstruktionselemente abgedichtet. Im Vergleich zu einer Abdichtung von relativ zueinander bewegten Konstruktionselementen ist die Abdichtung von miteinander fest verbundenen Konstruktionselementen einfach und wirtschaftlich möglich, unterliegt insbesondere keinem Verschleiß und ist hermetisch dicht ausführbar. Das über den Einlass in die Strömungsmaschine geleitete Medium treibt diese an und verlässt die Strömungsmaschine ausschließlich über den Auslass.

Innerhalb der Strömungsmaschine entstehen keinerlei Verluste durch Leckage nach außen. Hierdurch wird zum einen der Wirkungsgrad der erfindungsgemäßen Strömungsmaschine gegenüber herkömmlichen Strömungsmaschinen vergleichbarer Leistung verbessert. Zum anderen besteht die Möglichkeit, durch eine hermetisch dichte Ausbildung der gesamten, die Strömungsmaschine enthaltenden Dampfkraftanlage Leckageverluste des Mediums zu verhindern, so dass eine aufwendige Mediumszuführung zwecks Verlustkompensation mit einer Mediumsaufbereitung und deren Überwachung entfallen kann. Schließlich wird eine Verunreinigung des die Strömungsmaschine antreibenden Mediums durch ein Eindringen von Fremdmedien in die Strömungsmaschine verhindert. Dieses führt insgesamt zu einem verbesserten Wirkungsgrad sowie zu einer gesteigerten Lebensdauer der erfindungsgemäßen Strömungsmaschine, da diese einem deutlich geringeren Verschleiß unterliegt.

Gemäß einem weiteren Merkmal der Erfindung ist die Welle wirktechnisch mittels einer magnetischen Kupplung mit einem Generator verbunden. Dieser Generator ist vorzugsweise außerhalb des Gehäuses der Strömungsmaschine angeordnet. Aufgrund der magnetischen Kupplung ist im Gehäuse keine. Durchführung für die Welle erforderlich, um diese mit dem Generator zu verbinden. Die Übertragung des Drehmomentes von der Strömungsmaschine auf den Generator erfolgt durch den das Gehäuse der Strömungsmaschine durchdringenden magnetischen Kraftschluss der Kupplung. Als Generator kann mit Vorteil ein beliebiger herkömmlicher Generator mit entsprechenden Leistungsparametern verwendet werden.

Um die mit einer magnetischen Kupplung verbundenen Nachteile wie z. B. die Begrenzung des Anlaufdrehmomentes zu vermeiden, wird mit einer weiteren Ausführungsform der Erfindung vorgeschlagen, dass ein Bereich der den Rotor tragenden Welle der Strömungsmaschine als Welle eines innerhalb des Gehäuses angeordneten Generators ausgebildet ist. Auch hier ist eine hermetisch dichte Ausbildung des innerhalb des Gehäuses vom Medium beaufschlagten Raumvolumens auf einfache Weise sichergestellt, da die Welle der Strömungsmaschine nicht aus dem Gehäuse herausgeführt werden muss und folglich keinerlei Wellendurchführungen mit zueinander bewegten Konstruktionselementen abgedichtet werden müssen. Die gesamte Welle und insbesondere deren als Generatorwelle ausgebildeter Bereich ist in dem vom Medium beaufschlagten Raumvolumen angeordnet.

Nach einem besonders vorteilhaften Vorschlag der Erfindung ist der Generator in dem vom Medium beaufschlagten Raumvolumen angeordnet. In diesem Fall ist vorzugsweise das den Rotor, die Welle und den gesamten Generator umschließende Gehäuse der Strömungsmaschine hermetisch dicht ausgebildet. Der gesamte Generator sowie radiale und axiale Lagerungen der Welle sind in dem vom Medium beaufschlagten Raum angeordnet und müssen daher hinsichtlich der dort herrschenden Temperatur, Feuchtigkeit und des Drucks ausgelegt sein. Um dieses zu vermeiden, wird mit der Erfindung des Weiteren vorgeschlagen, dass die während des Betriebs der Strömungsmaschine mit der Welle rotierenden Elemente des Generators gegenüber dessen ortsfesten Elementen hermetisch abgedichtet sind. In besonders vorteilhafter Weise erfolgt diese Abdichtung durch ein mit Teilbereichen des Gehäuses ein hermetisch dichtes Raumvolumen ausbildendes Spaltrohr. Dieses umgibt die Welle und die auf ihr angeordneten und rotierenden Elemente der Lager und des Generators und ist hermetisch dicht gegenüber dem Gehäuse ortsfest in diesem angeordnet.

Um eine Verunreinigung des Generators und der Lagerung in der Strömungsmaschine durch Partikel oder andere Verunreinigungen aus dem Hauptmediumstrom zu verhindern, wird mit der Erfindung des weiteren vorgeschlagen, dass der als Generatorwelle ausgebildete Bereich der Welle gegenüber deren die Rotorwelle tragenden Bereich mittels einer Bürstendichtung abgedichtet ist. Durch die Bürstendichtung wird ein Eindringen beispielsweise von Abriebpartikeln und korrosionsbedingten Schwebekörpern während des Betriebs der Strömungsmaschine in den sensiblen Bereich des Generators und der Lagerung verhindert. Hierdurch wird die Lebensdauer der elektrischen Komponenten und der Lagerung verlängert. Zusätzlich wird die Migration des Prozessmediums aus dem Entspannungsbereich der Strömungsmaschine in den Generatorraum reduziert, wodurch in vorteilhafter Weise die auf den Generator wirkenden thermischen Belastungen reduziert werden. Neben einer das Gehäuse zwischen Rotor und Generator gegenüber der rotierenden Welle abdichtenden Bürstendichtung ist eine Verwendung von weiteren gegebenenfalls zusätzlichen Dichtelementen wie Labyrinthdichtungen oder ähnlichem möglich.

Nach einem weiteren Merkmal der Erfindung ist die Strömungsmaschine vorzugsweise eine zwei- bis dreistufige Turbine. Ebenfalls möglich ist die Verwendung eines Turboexpanders. Eine kurze axiale Bauweise des Entspannungsbereiches der Strömungsmaschine ist vorteilhaft, da die Belastungen, die auf die gleichzeitig als Generatorwelle dienende Welle und deren Lagerung wirken, gering gehalten werden. Um den Wirkungsgrad der Strömungsmaschine zu steigern, ist der zwischen Leitschaufeln des Stators der Turbine und dem Rotor vorliegende ringförmige Spalt mittels einer Bürstendichtung abgedichtet. Hierdurch wird ein Vorbeiströmen des die Turbine antreibenden Mediums ohne Einwirkung auf die Beschaufelung verringert.

Mit einer besonders vorteilhaften Ausführungsform der Erfindung wird vorgeschlagen, dass das Gehäuse Anschlüsse und Leitungen für ein Temperierungsmedium zur Temperierung des Generators, insbesondere dessen Stators, aufweist. Die Leitungen sind vorzugsweise als innerhalb der Gehäusewandung im Bereich der zu kühlenden Elemente des Generators verlaufende Kühlkanäle ausgebildet. Es ist ebenfalls möglich, dass die Kühlung durch innerhalb des Gehäuses verlaufende Rohrleitungen erfolgt. Den thermischen Belastungen des Generators oder einzelner Generatorelemente, die dadurch entsteht, dass der Generator zumindest teilweise innerhalb des vom Antriebsmedium der Strömungsmaschine beaufschlagten Raumvolumens angeordnet ist, wird so entgegengewirkt.

Alternativ oder als Ergänzung zu dieser Kühlung wird mit der Erfindung weiterhin vorgeschlagen, eine Zuführung für ein Kühlmedium zur Kühlung des den als Generatorwelle ausgebildeten Bereich der Welle umgebenden Raumvolumens vorzusehen. Eine derartige zusätzliche Kühlung ist insbesondere wirkungsvoll, wenn der als Generatorwelle ausgebildete Bereich der Welle gegenüber dem die Rotorwelle tragenden Bereich mittels einer Bürstendichtung abgedichtet ist. In diesem Fall lassen sich die thermischen Belastungen sowohl der beim Betrieb der Strömungsmaschine rotierenden als auch stillstehenden Teile des Generators reduzieren. Der Generator unterliegt deutlich geringeren Temperaturschwankungen und einem wesentlich geringeren Korrosionsangriff, so dass er weniger aufwendig und kostengünstiger hergestellt werden kann, während gleichzeitig seine Lebensdauer im Vergleich zu herkömmlichen Generatoren möglichst wenig reduziert wird.

Mit der Erfindung wird des weiteren eine Dampfkraftanlage vorgeschlagen, die eine Regelarmatur, eine Speisewasserpumpe, einen Kessel mit vorzugsweise mehreren Wärmetauschereinheiten, einen Kondensator und eine Strömungsmaschine der zuvor beschriebenen Art aufweist, deren Prozessmediumskreislauf hermetisch dicht ausgebildet ist. In besonders vorteilhafter Weise sind bei der Dampfkraftanlage die Zuführungen und Anschlüsse zur Temperierung des Generators strömungstechnisch mit der Speisewasserleitung zwischen Speisewasserpumpe und Kessel verbunden. Durch die Kühlung des Generators bzw. des als Generatorwelle ausgebildeten Bereiches der Welle wird in vorteilhafter Weise kein prozessfremdes Kühlmedium in den Prozesskreislauf eingebracht. Eine aufwendige Aufbereitung und Kontrolle des Kühlmediums ist daher nicht notwendig. Dessen geeignete und gleichmäßige Temperierung ist durch die Abzweigung von Prozessmedium aus dem Prozesskreislauf gewährleistet. Die gesamte Dampfkraftanlage verbleibt auf diese Weise hermetisch dicht, weshalb sie insbesondere im Niederleistungsbereich wirtschaftlich einsetzbar ist.

Weitere Einzelheiten und Merkmale der Erfindung ergeben sich aus der folgenden, nicht beschränkenden Beschreibung bevorzugter beispielhafter Ausführungsformen anhand der Figuren. Dabei zeigt:
- Fig. 1: ein Schema bzw. Wärmeschaltbild einer beispielhaften erfindungsgemäßen Dampfkraftanlage,
- Fig. 2: eine erste Ausführungsform der in der Dampfkraftanlage gemäß Fig. 1 verwendeten erfindungsgemäßen Strömungsmaschine und
- Fig. 3: eine zweite Ausführungsform der in der Dampfkraftanlage gemäß Fig. 1 verwendeten Strömungsmaschine.

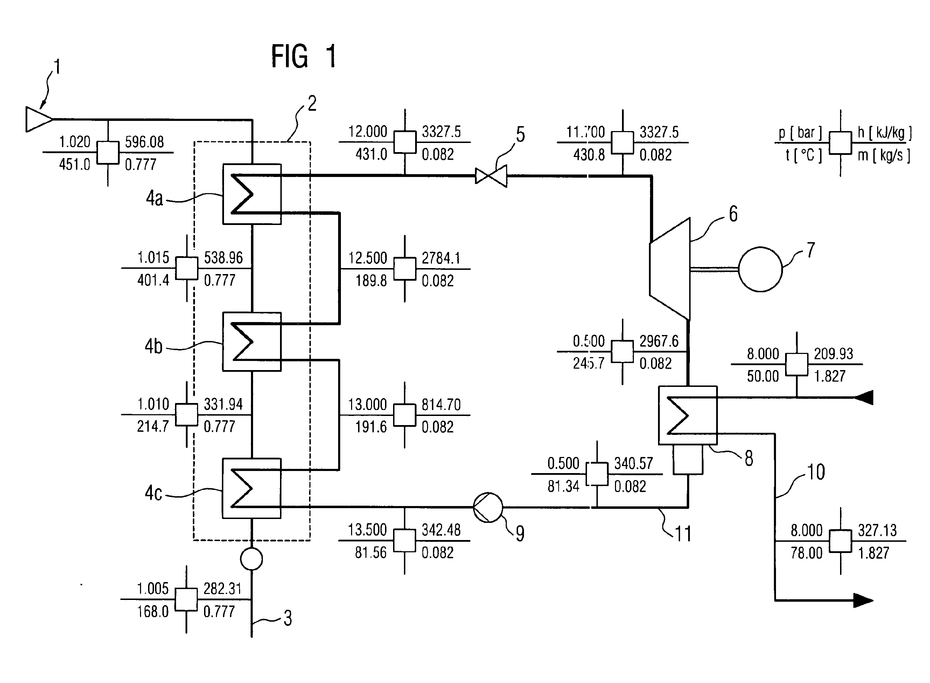

Fig. 1 zeigt eine schematische Gesamtansicht einer erfindungsgemäßen Dampfkraftanlage. Mit dieser wird Abwärme einer Wärmequelle 1 mit geringer thermischer Energie in elektrische Energie umgewandelt. Bei der Wärmequelle 1 handelt es sich im vorliegenden Beispiel um einen Biogasmotor mit einer mechanischen Leistung von 554 KW und einer elektrischen Leistung von 526 KW. Wie man Fig. 1 entnehmen kann, verlassen die Abgase die Wärmequelle 1 in einem Abgasstrom 3 mit einer Temperatur von 451°C bei einem Druck von 1,020 bar in einem Massenstrom von 0,777 kg/s. Die Enthalpie des Abgasstroms 3 beträgt 596,08 kJ/kg. Der Abgasstrom 3 in einen Kessel 2 und nacheinander durch drei Wärmetauscher 4a, b, c geleitet und verlässt anschließend den Kessel 2 bei einem Druck von 1,005 bar und einer Temperatur von 168°C.

Ein Prozessmediumsstrom 11 wird im Gegenstrom und oder Querstrom durch die Wärmetauscher 4a, b, c des Kessels 2 geleitet. Das Prozessmedium ist im vorliegenden Fall Wasser- bzw. Wasserdampf. Die Druck-, Temperatur-, Massenstrom- und Enthalpiewerte des Prozessmediumsstroms 11 sind an den entsprechenden Stellen des Systems gekennzeichnet. In den Wärmetauscher 4a, b, c des Kessels 2 wird Energie vom Abgasstrom 3 der Wärmequelle 1 auf den Prozessmediumsstrom 11 übertragen. Der Prozessmediumsstrom 11 verlässt den Kessel 2 bei einem Druck von 12 bar und einer Temperatur von 431°C. Er wird durch eine beispielhaft dargestellte Regelarmatur 5 geleitet und dabei auf einen Strömungsmaschineneingangsdruck von 11,7 bar reduziert. Der Prozessmediumsstrom 11 wird in die Strömungsmaschine 6 eingeleitet und in dieser entspannt. Mit der Strömungsmaschine 6 ist ein Generator 7 wirktechnisch verbunden. Dort wird die von der Strömungsmaschine 6 auf den Generator 7 übertragene Rotationsenergie in elektrische Energie umgewandelt. Der Generator 7 besitzt eine Leistung von 29 kW. Der die Strömungsmaschine 6 verlassende Prozessmediumsstrom 11 wird durch einen Kondensator 8 geleitet, in dem er auf eine Temperatur von 81,34°C heruntergekühlt wird, indem er Energie an einen Kühlwasserstrom 10 abgibt. Anschließend wird der Druck des Prozessmediumsstroms 11 mittels einer Speisewasserpumpe 9 erhöht und wiederum in den Kessel 2 eingeleitet.

Sämtliche Funktionseinheiten und Leitungen, die vom Prozessmediumsstrom 11 durchströmt werden, sind in der dargestellten Dampfkraftanlage hermetisch dicht ausgebildet. Dies bedeutet, dass kein Prozessmedium aus dem Prozessmediumskreislauf austritt und umgekehrt keine Fremdmedien eindringen und diesen verunreinigen.

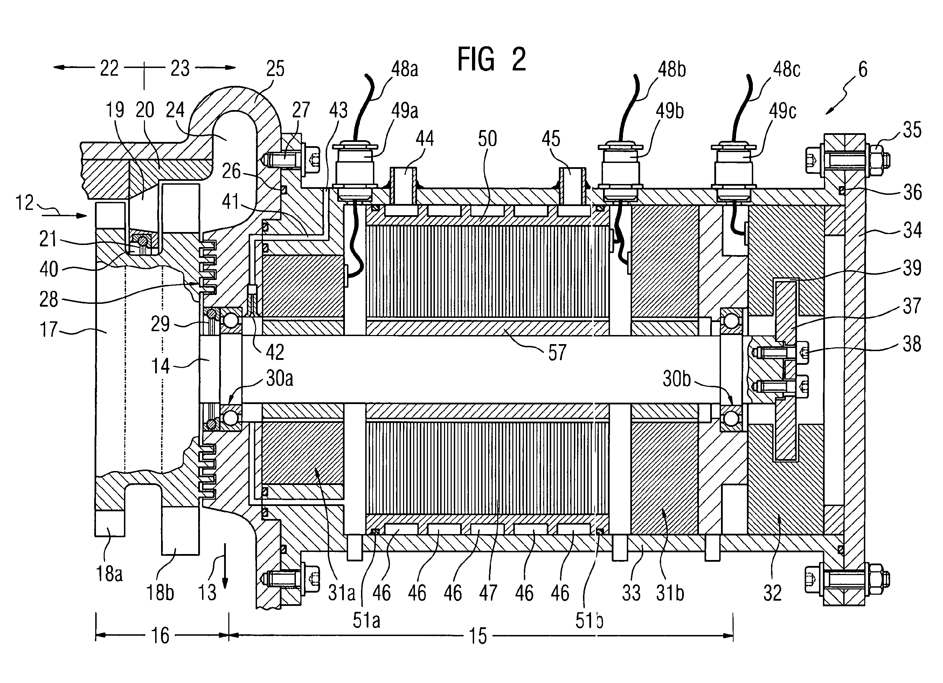

Fig. 2 zeigt eine besonders vorteilhafte Ausführungsform einer in der in Fig. 1 dargestellten Dampfkraftanlage verwendeten Strömungsmaschine 6. Bei dieser beispielhaften Ausführungsform sind die Strömungsmaschine 6 und der Generator 7 in eine Funktionseinheit integriert. Die dargestellte Strömungsmaschine weist eine Welle 14 auf, die einen Rotorwellenbereich 16 und einen Generatorwellenbereich 15 besitzt. Die Welle 14 trägt im Rotorwellenbereich 16 einen Rotor 17. Der Rotor 17 ist mit zwei in Umfangsrichtung verlaufenden Laufradbeschaufelungen 18a, b versehen. Die Laufradbeschaufelungen 18a, b wirken mit einer Leitradbeschaufelung 19 zusammen, die an einem den Rotor 17 umgebenden Stator 20 angeordnet ist. Dieser ist ortsfest in einem Rotorgehäuse 25 angeordnet, das einen zeichnerisch nicht näher dargestellten Einlass 12 und Auslass 13 aufweist. Der Prozessmediumsstrom 11 wird durch den Einlass 12 in die Hochdruckseite 22 der Strömungsmaschine 6 eingeleitet. Er wird nachfolgend durch den zwischen Rotor 17 und Stator 20 befindlichen Ringspalt zur Niederdruckseite 23 geleitet und treibt dabei über die Laufradbeschaufelung 18a, b und die Leitradbeschaufelung 19 in an sich bekannter Weise den Rotor 17 an. Nachfolgend gelangt der Prozessmediumsstrom 11 in einen Sammelraum 24 und wird von diesem über den Auslass 13 aus der Strömungsmaschine 6 hinaus und zum Kondensator 8 geführt.

Der Sammelraum 24 ist mittels einer Labyrinthdichtung 28, die sich zwischen dem Rotor 17 und dem Rotorgehäuse 25 befindet, abgedichtet. Da mittels der Labyrinthdichtung 28 keine hermetische dichte Abdichtung des zwischen dem rotierenden Rotor 17 und dem stillstehenden Rotorgehäuse 25 vorliegenden Zwischenraums erfolgt, kann allerdings ein Teil des Prozessmediumsstroms 11 durch die Labyrinthdichtung 28 hindurchdringen und würde bei einer herkömmlichen Strömungsmaschine Leckageverluste verursachen. Aus der nachfolgenden Beschreibung wird hervorgehen, dass diese Leckageverluste durch die erfindungsgemäße Strömungsmaschine 6 vermieden werden.

Das Rotorgehäuse 25 ist mittels einer Flanschverschraubung 27 mit einem Generatorgehäuse 33 verbunden. Zwischen dem Rotorgehäuse 25 und dem Generatorgehäuse 33 ist ein O-Ring 26 angeordnet, um den zwischen Rotorgehäuse 25 und Generatorgehäuse 33 vorliegenden Spalt hermetisch abzudichten. Das Generatorgehäuse 33 ist endseitig mit einem Deckel 34 verschlossen. Dieser ist mit dem Generatorgehäuse 33 mittels einer Flanschverschraubung 35 unter Zwischenlage eines O-Rings 36 hermetisch dicht verschraubt. Die aus Rotorgehäuse 25, Generatorgehäuse 33 und Deckel 34 gebildete Einheit ist somit insgesamt hermetisch dicht.

Auf dem Generatorwellenbereich 15 der Welle 14 ist ein Läufer 57 angeordnet, der zusammen mit einem Stator 47 den Generator ausbildet. Die durch den Generator erzeugte elektrische Energie wird über einen elektrischen Anschluss 48b aus dem Generatorgehäuse 33 hinausgeführt. Der elektrische Anschluss 48b ist mittels einer Anschlussbuchse 49b hermetisch dicht ausgebildet.

Die Welle 14 ist mittels Magnetradiallagern 31a, b und einem Magnetaxiallager 32 gelagert. An dem dem Rotor 17 gegenüberliegenden Ende der Welle 14 ist mittels einer Verschraubung 38 eine Axiallagerscheibe 37 befestigt, die in einen Spalt 39 des Magnetaxiallagers 32 eingreift. Neben der Lagerung mittels der Magnetradiallager 31a, b und des Magnetaxiallagers 32 sind mechanische Fanglager 58a, b vorgesehen, die die Welle 14 bei Funktionsstörungen der Magnetlager auffangen.

Bei einem Betrieb der dargestellten Strömungsmaschine dringen Leckageströme des Prozessmediumsstroms 11 durch die Labyrinthdichtung 28 sowie eine zwischen dem Rotorgehäuse 25 und der Welle 14 angeordnete Bürstendichtung 29 in das von dem Generatorgehäuse 33 und dem Deckel 34 umgebene Raumvolumen ein. Die Magnetlager 31, 32, der Läufer 57 sowie der Stator 47 laufen daher innerhalb des Prozessmediumsstroms 11. Sie sind daher im Vergleich zu herkömmlichen Dampfkraftanlagen höheren Temperaturen, Drücken und Feuchtigkeiten ausgesetzt.

Zum Zwecke einer Temperierung des Stators 47 ist innerhalb des Generatorgehäuses 33 eine Speisewasserkanalabdeckung 50 angeordnet. Die Speisewasserkanalabdeckung 50 bildet mit dem Generatorgehäuse 33 miteinander verbundene Speisewasserkanäle 46 aus, die über einen Speisewasserzulauf 44 und einen Speisewasserrücklauf 45 mit der zwischen Speisewasserpumpe 9 und Kessel 2 verlaufenden Speisewasserleitung verbunden sind. Durch Einleiten des vom Prozessmediumsstrom 11 abgezweigten Speisewassers durch den Speisewasserzulauf 44 in die Speisewasserkanäle 46 erfolgt eine Kühlung des Generatorgehäuses 33 sowie des Stators 47. Um eine Abdichtung der Speisewasserkanäle 46 gegenüber dem Raumvolumen innerhalb des Generatorgehäuses 33 zu erreichen, sind zwischen dem Generatorgehäuse 33 und der Speisewasserkanalabdeckung 50 O-Ringe 51a, b angeordnet.

Eine weitere Kühlungsmöglichkeit des vom Generatorgehäuses 33 und Deckel 34 umgebenen Raumvolumens ist unmittelbar zwischen dem rotorseitigen Fanglager 58a und dem Magnetradiallager 31a vorgesehen. Durch das Generatorgehäuse 33 sowie das Rotorgehäuse 25 verläuft ein Kühlmittelkanal 41. Der Kühlmittelkanal 41 ist an der Außenseite des Generatorgehäuses 33 mit einem Kühlmittelanschluss 43 versehen. In der wellenseitigen Mündungsöffnung des Kühlmittelkanals 41 ist eine Kühlmitteldüse 42 angeordnet. Der Kühlmittelanschluss 43 ist in geeigneter Weise ebenfalls mit der zwischen der Speisewasserpumpe 9 und dem Kessel 2 verlaufenden Speisewasserleitung verbunden. Das hier abgezweigte Speisewasser wird in den Kühlmittelkanal 41 eingeleitet und über die Kühlmitteldüse 42 in den den Generatorwellenbereich umgebenden Ringspalt zerstäubt. Hierdurch kommt es einerseits zu einer Kühlung der im Generatorgehäuse 33 angeordneten Bauelemente sowie andererseits zu einer Erhöhung des dort vorliegenden Drucks, so dass das Eindringen von Leckageströmen des Prozessmediums über die Labyrinthdichtungen 28 sowie die Bürstendichtung 29 verringert werden kann.

Die Bürstendichtung 29 dient vornehmlich dazu, einen Austausch von Prozessmedium oder gegebenenfalls vorliegenden Verunreinigungen zwischen dem Prozessmediumsstrom 11 innerhalb des Sammelraums und dem innerhalb des Generatorgehäuses 33 vorliegenden Prozessmediums zu vermindern.

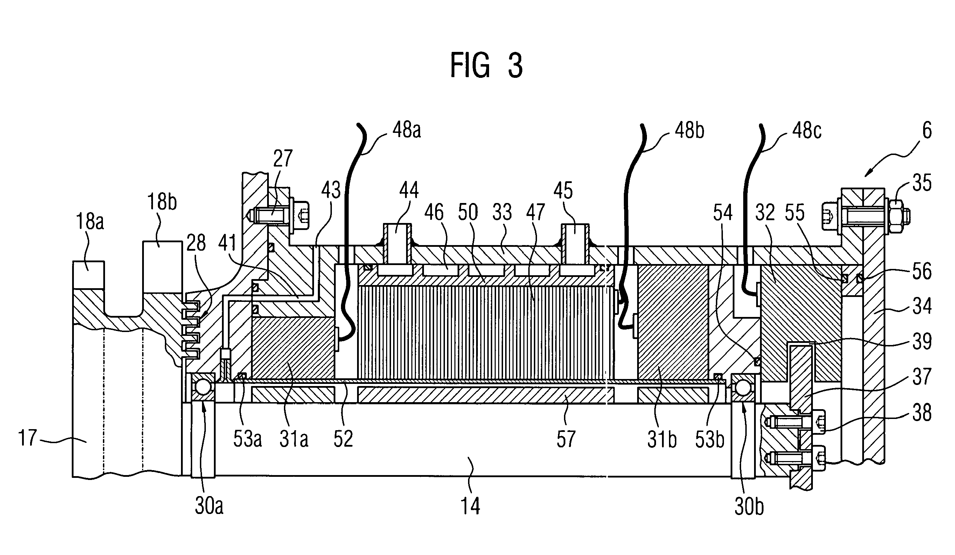

Eine weitere Ausführungsform der vorliegenden Erfindung ist in Fig. 3 dargestellt. Funktionseinheiten dieser Ausführungsform, die Funktionseinheiten der in Fig. 2 dargestellten Ausführungsform entsprechen, sind mit gleichen Bezugszeichen gekennzeichnet. Soweit diese Funktionseinheiten bereits im Zusammenhang mit der Beschreibung der Fig. 2 erläutert wurden, wird auf deren nachfolgende Erläuterung verzichtet und auf die obigen Ausführungen verwiesen.

Innerhalb des Generatorgehäuses 33 ist ein Spaltrohr 52 angeordnet. Das Spaltrohr 52 ist gegenüber dem Generatorgehäuse 33 mittels eines O-Rings 53b und gegenüber dem Rotorgehäuse mittels eines O-Rings 53a hermetisch abgedichtet. Es umgibt die Welle 14 auf deren gesamten Umfang und verläuft zwischen den zusammen mit der Welle 14 rotierenden Einheiten der Magnetradiallager 31a, b und dem Läufer 57 einerseits und den ortsfest im Generatorgehäuse 33 angeordneten Einheiten der Magnetlager 31a, b und dem Stator 47 andererseits. Durch die hermetisch dichte Anordnung des Spaltrohres 52 wird das den Stator 47 sowie die ortsfest im Generatorgehäuse 33 angeordneten Einheiten der Magnetlager 31a, b umgebende Raumvolumen hermetisch gegenüber dem vom Prozessmediumsstrom 11 beaufschlagten und die Welle 14 umgebenden Raumvolumen abgedichtet. Hierdurch unterliegt der Stator sowie die Magnetlager 31a, b weitaus geringeren thermischen Belastungen und sind darüber hinaus nicht der Feuchtigkeit des Prozessmediumsstroms 11 ausgesetzt. Die elektrischen Anschlüsse 40a, b, c müssen nicht hermetisch dicht ausgebildet sein.

Weitere O-Ringe 54, 55, 56 dichten den vom Prozessmediumsstrom 11 beaufschlagten und die Welle 14 umgebenden Raum hermetisch ab.

## Patentansprüche

1. Strömungsmaschine, insbesondere Dampfturbine, vorzugsweise zur Verstromung von Abwärme geringer thermischer Leistung, mit einem einen Einlass und einen Auslass für ein die Strömungsmaschine antreibendes Prozessmedium aufweisenden Gehäuse und einer einen Rotor mit Laufschaufeln tragenden Welle, die in dem Gehäuse gelagert ist,
wobei Einlass und Auslass hermetisch dicht mit Zu- und Ableitungen zur Strömungsmaschine verbindbar sind und das innerhalb des Gehäuses vom Prozessmedium beaufschlagte Raumvolumen hermetisch abgedichtet ist.

2. Strömungsmaschine nach Anspruch 1,
**dadurch gekennzeichnet, dass**
die Welle wirktechnisch mittels einer magnetischen Kupplung mit einem Generator verbunden ist.

3. Strömungsmaschine nach Anspruch 1,
**dadurch gekennzeichnet, dass**
ein Bereich der den Rotor tragenden Welle der Strömungsmaschine als Welle eines innerhalb des Gehäuses angeordneten Generators ausgebildet ist.

4. Strömungsmaschine nach Anspruch 3,
**dadurch gekennzeichnet, dass**
der Generator in dem vom Prozessmedium beaufschlagten Raumvolumen angeordnet ist.

5. Strömungsmaschine nach Anspruch 3 oder 4,
**dadurch gekennzeichnet, dass**
die während deren Betrieb mit der Welle rotierenden Elemente des Generators gegenüber dessen ortsfesten Elementen hermetisch abgedichtet sind.

6. Strömungsmaschine nach Anspruch 5,
**dadurch gekennzeichnet, dass**
zwischen den während deren Betrieb mit der Welle rotierenden Elementen des Generators und dessen ortsfesten Elementen ein mit Teilbereichen des Gehäuses ein hermetisch dichtes Raumvolumen ausbildendes Spaltrohr angeordnet ist.

7. Strömungsmaschine nach einem der Ansprüche 3 bis 6,
**dadurch gekennzeichnet, dass**
der als Generatorwelle ausgebildete Bereich der Welle gegenüber deren die Rotorwelle tragenden Bereich mittels einer Bürstendichtung abgedichtet ist.

8. Strömungsmaschine nach einem der vorhergehenden Ansprüche,
**dadurch gekennzeichnet, dass**
diese eine zwei- bis dreistufige Turbine ist.

9. Strömungsmaschine nach einem der vorhergehenden Ansprüche,
**dadurch gekennzeichnet, dass**
diese ein Turboexpander ist.

10. Strömungsmaschine nach Anspruch 8,
**dadurch gekennzeichnet, dass**
ein ringförmiger Spalt zwischen Leitschaufeln des Stators der Turbine und dem Rotor mittels einer Bürstendichtung abgedichtet ist.

11. Strömungsmaschine nach einem der Ansprüche 3 bis 10,
**dadurch gekennzeichnet, dass**
das Gehäuse zur Temperierung des Generators,
insbesondere des Stators,
Anschlüsse und Leitungen für ein Temperierungsmedium aufweist.

12. Strömungsmaschine nach einem der Ansprüche 3 bis 11,
**dadurch gekennzeichnet, dass**
eine Zuführung für ein Kühlmedium zur Kühlung des den als Generatorwelle ausgebildeten Bereich der Welle umgebenden Raumvolumens aufweist.

13. Dampfkraftanlage,
aufweisend eine Regelarmatur, eine Speisewasserpumpe, einen Kessel mit vorzugsweise mehreren Wärmetauschereinheiten, einen Kondensator und eine Strömungsmaschine nach einem der Ansprüche 1 bis 12,
**dadurch gekennzeichnet, dass**
deren Kreislauf des die Strömungsmaschine antreibenden Prozessmediums hermetisch dicht ausgebildet ist.

14. Dampfkraftanlage,
aufweisend eine Regelarmatur, eine Speisewasserpumpe, einen Kessel mit vorzugsweise mehreren Wärmetauschereinheiten, einen Kondensator und eine Strömungsmaschine nach Anspruch 11 oder 12,
**dadurch gekennzeichnet, dass**
die Zuführung und die Anschlüsse der Generatorkühlung strömungstechnisch mit der Speisewasserleitung zwischen Speisewasserpumpe und Kessel verbunden sind.
